# EUROPÄISCHE PATENTANMELDUNG

(11) **EP 4 836 138 A1**
(43) Veröffentlichungstag der Anmeldung: **04.11.2026**
(21) Anmeldenummer: 25173544.5
(22) Anmeldetag: 30.04.2025
(51) Int. Cl.: H01M 50/247

(54) **FIXIERUNG EINER STEUERUNGSVORRICHTUNG AN EINER VERGUSSMASSE**

(71) Anmelder: Hilti Aktiengesellschaft, 9494 Schaan (LI)
(72) Erfinder: Stanger, Robert, 87600 Kaufbeuren (DE); Falkenstein, Reinhold, 86836 Untermeitingen (DE); Richter, Rene, 86199 Augsburg (DE); Horst, Jonas, 86199 Augsburg (DE)
(74) Vertreter: Hilti Aktiengesellschaft Corporate Intellectual Property

(57) **Zusammenfassung**

Verfahren zum Herstellen eines Akkumulators, insbesondere als Energiespeichereinheit für eine Werkzeugmaschine, enthaltend wenigstens eine Energiespeicherzelle, eine Steuerungsvorrichtung und ein Akkugehäuse, wobei die folgenden Verfahrensschritte enthalten sind:
- Einführen wenigstens einer Anzahl an Energiespeicherzelle in eine Akkugehäuse;
- Einführen einer Vergussmasse in das Akkugehäuse zum vollständigen Umschließen der wenigstens einen Energiespeicherzelle, sodass wenigstens ein Anteil der Vergussmasse mit einer Höhe in einer Richtung über den Energiespeicherzelle positioniert ist; und
- Positionieren der Steuerungsvorrichtung auf einer Oberfläche der Vergussmasse, sodass die Steuerungsvorrichtung an der Vergussmasse haftet und in Position gehalten wird.

## Beschreibung

Die vorliegende Erfindung betrifft ein Verfahren zum Herstellen eines Akkumulators, insbesondere als Energiespeichereinheit für eine Werkzeugmaschine, enthaltend wenigstens eine Energiespeicherzelle, eine Steuerungsvorrichtung und ein Akkugehäuse.

Akkumulatoren als Energieversorgung einer Werkzeugmaschine enthalten für gewöhnlich ein Gehäuse mit einer Schnittstelle, eine Anzahl an Akku-Zellen in einer entsprechenden Halterung sowie eine Steuerungsvorrichtung. Die Akku-Zellen dienen zum Aufnehmen, Speichern und Abgeben elektrischer Energie. Die Schnittstelle dient zum wiederlösbaren Verbinden des Akkumulators mit einer Werkzeugmaschine oder einer Ladevorrichtung. Die Steuerungsvorrichtung dient zum Steuern und Regeln der verschiedenen Funktionen des Akkumulators.

Die Steuerungsvorrichtung ist oftmals in Form einer Leiterplatte ausgestaltet, die in einer Schale positioniert ist. Die Schale mit der Steuerungsvorrichtung wird für gewöhnlich form- oder kraftschlüssig mit der Halterung für die Akku-Zellen verbunden. Eine durch Schrauben verwirklichte form- oder kraftschlüssige Verbindung der Schale mit der Halterung erfordern dabei eine genau aufeinander abgestimmte Geometrie. Diese erfordert wiederum genaue Bauteiltoleranzen, die teuer und zeitaufwendig in der Herstellung sind.

Das Weiteren führt die punktuelle kraftschlüssige Verbindung zu hohen punktuellen Lasten auf die einzelnen Bauteile. Die ist insbesondere der Fall bei einem Sturz des Akkumulators aus einer großen Höhe und/oder bei der Anwendung des Akkumulators mit hohen Vibrationen.

Es ist damit Aufgabe der vorliegenden Erfindung das vorstehend beschriebene Problem zu lösen.

Die Aufgabe wird gelöst durch den Gegenstand des unabhängigen Patentanspruchs 1.

Weitere vorteilhafte Ausführungsformen des erfindungsgemäßen Gegenstands sind in den entsprechenden abhängigen Patentansprüchen enthalten.

Die Aufgabe wird dabei insbesondere gelöst durch ein Verfahren zum Herstellen eines Akkumulators, insbesondere als Energiespeichereinheit für eine Werkzeugmaschine, enthaltend wenigstens eine Energiespeicherzelle, eine Steuerungsvorrichtung und ein Akkugehäuse.

Erfindungsgemäß sind die folgenden Verfahrensschritte enthalten
- Einführen wenigstens einer Anzahl an Energiespeicherzelle in eine Akkugehäuse;
- Einführen einer Vergussmasse in das Akkugehäuse zum vollständigen Umschließen der wenigstens einen Energiespeicherzelle, sodass wenigstens ein Anteil der Vergussmasse mit einer Höhe in einer Richtung über den Energiespeicherzelle positioniert ist; und
- Positionieren der Steuerungsvorrichtung auf einer Oberfläche der Vergussmasse, sodass die Steuerungsvorrichtung an der Vergussmasse haftet und in Position gehalten wird.

Bei der Vergussmasse kann es sich um eine 1K- oder 2K-Vergussmassen aus PU (Polyurethan), Epoxid, Silikon oder dergleichen handeln.

Das Vergießen von selbstnivellierenden Materialien in einen dafür vorgesehenen Hohlraum ("potting") wird als Füllverguss bezeichnet. Dieses Verfahren dient unter anderem dazu, sensible Elektronik gegen schädliche Außeneinflüsse abzuschirmen oder Bauteile vor Spionage oder Brandgefahr zu schützen.

Entsprechend einer alternativen und vorteilhaften Ausführungsform kann es möglich sein, dass die Haftung der Steuerungsvorrichtung auf der Oberfläche der Vergussmasse durch eine Adhäsion und/oder Kohäsion erzeugt wird.

Gemäß einer weiteren vorteilhaften Ausführungsform kann es möglich sein, dass die Vergussmasse einen elektrischen Widerstandswert größer als 1x10¹²Ω*cm und/oder einen Wärmeleitfähigkeitswert größer als 0,4W/(m*K), bevorzugt größer als 0,3W/(m*K) aufweist.

Entsprechend einer weiteren vorteilhaften Ausführungsform kann der Verfahrensschritt enthalten sein:
- Positionieren eines Steuerungsvorrichtungsgehäuse zum Aufnehmen und Halten der Steuerungsvorrichtung auf einer Oberfläche der Vergussmasse, sodass das Steuerungsvorrichtungsgehäuse an der Vergussmasse haftet und in Position gehalten wird.

Gemäß einer weiteren vorteilhaften Ausführungsform kann es möglich sein, dass die Haftung des Steuerungsvorrichtungsgehäuses auf der Oberfläche der Vergussmasse durch eine Adhäsion und/oder Kohäsion erzeugt wird.

Weitere Vorteile ergeben sich aus der folgenden Figurenbeschreibung. In den Figuren sind verschiedene Ausführungsbeispiele der vorliegenden Erfindung dargestellt.

Die Figuren, die Beschreibung und die Ansprüche enthalten zahlreiche Merkmale in Kombination. Der Fachmann wird die Merkmale zweckmässigerweise auch einzeln betrachten und zu sinnvollen weiteren Kombinationen zusammenfassen.

Es zeigen:
- Figur 1: eine Seitenansicht auf einen erfindungsgemäßen Akkumulator gemäß einer beispielhaften Ausführungsform mit einem Akkugehäuse in einem geschlossen Zustand;
- Figur 2a: eine Seitenansicht auf den erfindungsgemäßen Akkumulator gemäß einer ersten beispielhaften Ausführungsform mit dem Akkugehäuse in einem geöffneten Zustand;
- Figur 2b: eine Seitenansicht auf den erfindungsgemäßen Akkumulator gemäß einer zweiten beispielhaften Ausführungsform mit dem Akkugehäuse in einem geöffneten Zustand; und

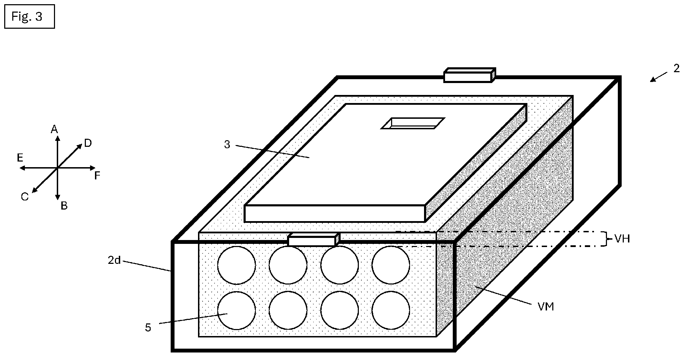

- Figur 3: eine perspektivische Ansicht auf den erfindungsgemäßen Akkumulator gemäß der beispielhaften Ausführungsform.

### Ausführungsbeispiele:

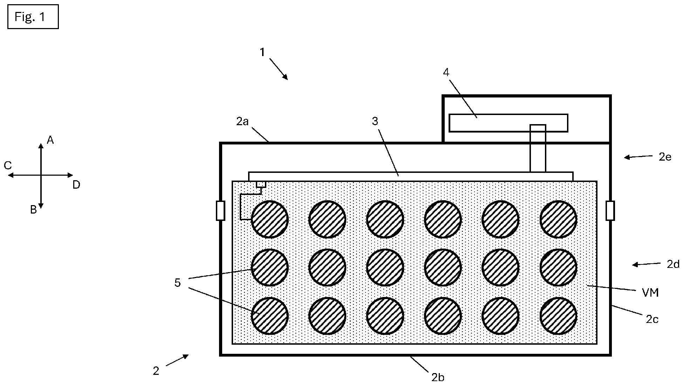

Figur 1 zeigt eine Schnittansicht durch einen Akkumulator 1 gemäß einer beispielhaften Ausführungsform.

Der Akkumulator 1 kann beispielsweise als Energiequelle wiederlösbar mit einer elektrischen Werkzeugmaschine verwendet werden.

Bei der Werkzeugmaschine kann es sich um einen Bohrhammer, Akku-Schrauber, eine Säge, ein Schleifgerät oder dergleichen handeln.

Die Werkzeugmaschine ist in den Figuren nicht dargestellt.

Der Akkumulator 1 enthält im Wesentlichen ein Akkugehäuse 2, eine Steuerungsvorrichtung 3, eine Akkuschnittstelle 4 und eine Anzahl an Energiespeicherzellen 5.

Das Akkugehäuse 2 weist eine Oberseite 2a, eine Unterseite 2b sowie vier Seitenwände 2c auf. An der Oberseite 2a des Akkugehäuses 2 ist eine Akkuschnittstelle 4 positioniert.

Darüber hinaus weist das Akkugehäuse 2 eine Wanne 2d und einen Deckel 2e auf.

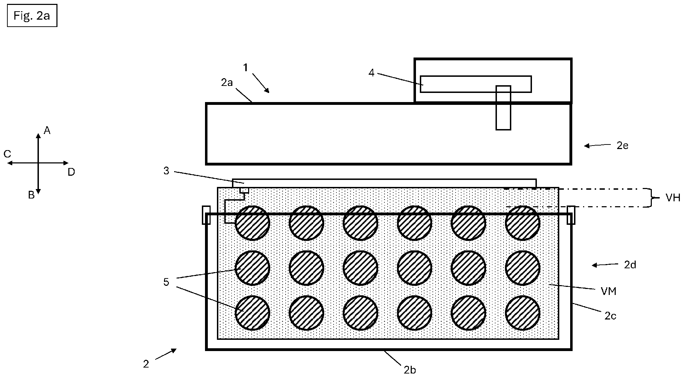

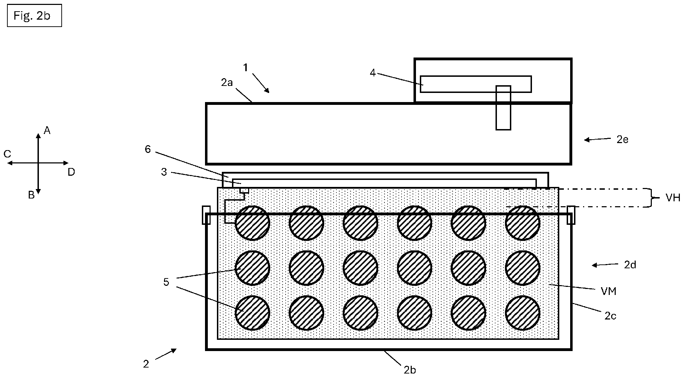

Wie in Figur 2a und 2b angedeutet, kann der Deckel 2e in Pfeilrichtung A von der Wanne 2d entfernt werden. Wenn der Deckel 2e von der Wanne 2d entnommen ist, befindet sich das Akkugehäuse 2 in einem geöffneten Zustand, sodass das Innere des Akkugehäuse 2 bzw. der Wanne 2d zugänglich ist.

Mit Hilfe der Akkuschnittstelle 4 kann der Akkumulator 1 wiederlösbar mit einer in den Figuren nicht gezeigten Werkzeugmaschine verbunden werden.

Des Weiteren kann mit Hilfe der Akkuschnittstelle 4 des Akkumulators 1 wiederlösbar mit einer Ladeeinrichtung zum Versorgen des Akkumulators 1 mit elektrischer Energie verbunden werden.

Die Ladeeinrichtung ist in den Figuren ebenfalls nicht dargestellt.

Die Steuerungsvorrichtung 3 dient zum Steuern und Regeln der unterschiedlichen Funktionen des Akkumulators 1. Die Steuerungsvorrichtung 3 ist in einem oberen Anteil des Akkugehäuses 2 in Pfeilrichtung A angeordnet.

Des Weiteren ist die Steuerungsvorrichtung 3 mit der Akkuschnittstelle 4 so verbunden, dass elektrische Energie von der Steuerungsvorrichtung 3 zu der Akkuschnittstelle 4 oder von der Akkuschnittstelle 4 zu der Steuerungsvorrichtung 3 geleitet werden kann.

Darüber hinaus können Daten und Informationen durch die Verbindung zwischen der Steuerungsvorrichtung 3 und der Akkuschnittstelle 4 ausgetauscht werden.

Die Energiespeicherzellen 5 können auch als Akku-Zellen, Batteriezellen, Sekundärzelle oder Energiezellen bezeichnet werden und sind im Inneren des Akkugehäuses 2 angeordnet.

Die einzelnen Energiespeicherzellen 5 sind in einer Zellhalterung positioniert. Die Zellhalterung ist in den Figuren nicht gezeigt.

Die Energiespeicherzellen 5 dienen zum Aufnehmen, Speichern und erneuten Abgeben elektrischer Energie. Die Energiespeicherzellen 5 sind in zylindrischer Form sowie auf Basis einer Lithium-Ionen-Technologie ausgestaltet. Jede Energiespeicherzelle 5 enthält an einem ersten Ende einen ersten Polkontakt und an einem zweiten Ende einen zweiten Polkontakt. Der erste Polkontakt kann als Pluspol und der zweite Polkontakt kann als Minuspol bezeichnet werden Die Polkontakte dienen zum Schließen eines Stromkreises und zur Übertragung elektrischer Energie von oder zu der Energiespeicherzelle 5.

Alternativ können die Energiespeicherzellen auch auf einer anderen geeigneten Technologie als Lithium-Ionen basieren. Es ist zudem auch möglich, dass unterschiedliche Technologien in einem einzigen Akkumulator 1 für die Energiespeicherzellen 5 zum Einsatz kommen.

In Figur 1 ist ein Akkumulator 1 gemäß einer ersten Ausführungsform gezeigt.

Gemäß der ersten Ausführungsform sind die Energiespeicherzellen 5 zylinderförmig ausgestaltet und jeweils in der Zellhalterung eingeführt.

Zur Durchführung des erfindungsgemäßen Verfahrens wird zum Öffnen des Akkugehäuses 2 zunächst der Deckel 2e von der Wanne 2d entnommen. Durch das Entfernen des Deckels 2e ist das Innere des Akkugehäuses 2 zugänglich.

Anschließend wird eine Vergussmasse VM in einem flüssigen Zustand in das Akkugehäuse 2 eingeführt, sodass die Zellhalterung sowie die in der Zellhalterung befindlichen Energiespeicherzellen 5 vollständig von der Vergussmasse VM umschlossen sind. Es wird dabei so viel Vergussmasse VM in das Akkugehäuse 2 eingeführt, dass ein gewisser Anteil der Vergussmasse VM über den Energiespeicherzellen 5 bzw. über der Zellhalterung steht. Der Anteil an Vergussmasse VM, der über den Energiespeicherzellen 5 bzw. der Zellhalterung steht weist in Pfeilrichtung A die Höhe oder Vergusshöhe VH auf.

In dem vorliegenden Ausführungsbeispiel beträgt die Vergusshöhe VH ungefähr 5 mm. Die Vergusshöhe VH kann jedoch auch mehr oder weniger als 5 mm betragen.

Nach einem Aushärten der Vergussmasse VM in dem Akkugehäuse 2 wird die Steuerungsvorrichtung 3 auf einer Oberfläche der Vergussmasse VM positioniert, sodass die Steuerungsvorrichtung 3 an der Vergussmasse VM haftet und in Position gehalten wird. Die Oberfläche der Vergussmasse VM ist dabei so ausgestaltet, dass die tatsächliche Haftung der Steuerungsvorrichtung 3 an der Vergussmasse VM durch eine Adhäsion und/oder Kohäsion erzeugt wird.

Bei der Vergussmasse VM handelt es sich um eine 1K-Vergussmasse aus Epoxid. Alternativ kann die Vergussmasse VM aus Silikon bestehen.

In Figur 2b ist eine weitere Ausführungsform des Akkumulators 1 gezeigt.

Die in Figur 2b gezeigte Ausführungsform unterscheidet sich von der in Figur 2a gezeigten Ausführungsform dadurch, dass ein Steuerungsvorrichtungsgehäuse 6 zum Aufnehmen und Halten der Steuerungsvorrichtung 3 enthalten ist. Das Steuerungsvorrichtungsgehäuse 6 ist dazu im Wesentlichen als Schale ausgestaltet.

Nachdem die Vergussmasse VM in einem flüssigen Zustand in das Akkugehäuse 2 eingeführt und ausgehärtet ist, wird das Steuerungsvorrichtungsgehäuse 6 auf eine Oberfläche der Vergussmasse VM positioniert.

Die Steuerungsvorrichtung 3 wird in das als Schale ausgestaltete Steuerungsvorrichtungsgehäuse 6 positioniert. In dem vorliegenden Ausführungsbeispiel wird die Steuerungsvorrichtung 3 durch einen Klebstoff mit dem Steuerungsvorrichtungsgehäuse 6 verbunden.

Alternativ kann die Steuerungsvorrichtung 3 durch eine oder mehrere Schrauben mit dem Steuerungsvorrichtungsgehäuse verbunden werden.

### Bezugszeichen

- 1: Akkumulator
- 2: Akkugehäuse
- 2a: Oberseite des Akkugehäuses
- 2b: Unterseite des Akkugehäuses
- 2c: Seitenwände des Akkugehäuses
- 2d: Wanne des Akkugehäuses
- 2e: Deckel des Akkugehäuses
- 3: Steuerungsvorrichtung
- 4: Akkuschnittstelle
- 5: Energiespeicherzellen
- 6: Steuerungsvorrichtungsgehäuse

- VM: Vergussmasse
- VH: Vergusshöhe

## Patentansprüche

1. Verfahren zum Herstellen eines Akkumulators (1), insbesondere als Energiespeichereinheit für eine Werkzeugmaschine, enthaltend wenigstens eine Energiespeicherzelle (5), eine Steuerungsvorrichtung (3) und ein Akkugehäuse (2),
**gekennzeichnet durch** die Verfahrensschritte:
- Einführen wenigstens einer Anzahl an Energiespeicherzellen (5) in ein Akkugehäuse (2);
- Einführen einer Vergussmasse (VM) in das Akkugehäuse (2) zum vollständigen Umschließen der wenigstens einen Energiespeicherzelle (5), sodass wenigstens ein Anteil der Vergussmasse (VM) mit einer Höhe (VH) in einer Richtung (A) über den Energiespeicherzelle (5) positioniert ist; und
- Positionieren der Steuerungsvorrichtung (3) auf einer Oberfläche der Vergussmasse (VM), sodass die Steuerungsvorrichtung (3) an der Vergussmasse (VM) haftet und in Position gehalten wird.

2. Verfahren zum Herstellen eines Akkumulators (1) nach Anspruch 1,
**dadurch gekennzeichnet, dass** die Haftung der Steuerungsvorrichtung (3) auf der Oberfläche der Vergussmasse durch eine Adhäsion und/oder Kohäsion erzeugt wird.

3. Verfahren zum Herstellen eines Akkumulators (1) nach Anspruch 1 oder 2,
**dadurch gekennzeichnet, dass** die Vergussmasse (VM) einen elektrischen Widerstandswert größer als 1x10¹² Ω*cm und/oder einen Wärmeleitfähigkeitswert größer als 0,4 W/(m*K), bevorzugt größer als 0,3 W/(m*K) aufweist.

4. Verfahren zum Herstellen eines Akkumulators (1) nach wenigstens einem der Ansprüche 1 bis 3,
**gekennzeichnet durch**
- Positionieren eines Steuerungsvorrichtungsgehäuses (6) zum Aufnehmen und Halten der Steuerungsvorrichtung (3) auf einer Oberfläche der Vergussmasse (VM), sodass das Steuerungsvorrichtungsgehäuse (6) an der Vergussmasse (VM) haftet und in Position gehalten wird.

5. Verfahren zum Herstellen eines Akkumulators (1) nach Anspruch 4,
**dadurch gekennzeichnet, dass** die Haftung des Steuerungsvorrichtungsgehäuses (6) auf der Oberfläche der Vergussmasse (VM) durch eine Adhäsion und/oder Kohäsion erzeugt wird.
